# EUROPÄISCHE PATENTANMELDUNG

(11) **EP 0 840 040 A2**
(43) Veröffentlichungstag der Anmeldung: **06.05.1998**
(21) Anmeldenummer: 97250319.7
(22) Anmeldetag: 28.10.1997
(51) Int. Cl.: F16J 15/02

(54) **Vorrichtung zur Abdichtung von zwei Räumen unterschiedlichen Druckes**

(30) Priorität: 29.10.1996 DE 19646527
(71) Anmelder: MANNESMANN Aktiengesellschaft, 40213 Düsseldorf (DE)
(72) Erfinder: Zacharias, Wolfgang, Dipl.-Ing., 47198 Duisburg (DE)
(74) Vertreter: Presting, Hans-Joachim, Dipl.-Ing.

(57) **Zusammenfassung**

Die Erfindung betrifft eine Vorrichtung zur Abdichtung von zwei Räumen unterschiedlichen Druckes über eine die Axialkräfte aufnehmende Schulter zwischen einem ersten warmgehenden metallischen Bauteil und mit einem radialen Spalt dazu angeordneten zweiten warmgehenden metallischen Bauteil, insbesondere Stator oder Gehäusedeckel und Gehäuse einer Turbomaschine, mit einer an der Schulter zur Anlage kommenden den radialen Spalt überdeckenden Dichtung.
Erfindungsgemäß wird vorgeschlagen, daß die Dichtung aus einem einen etwa rechteckigen Querschnitt aufweisenden und axial verschiebbaren Tragelement (5) besteht, das ein im Tragelement (5) angeordnetes die der Schulter (7) zugewandte Seite (6) des Tragelementes (5) zur Anlage an der Schulter (7) bringendes Mittel (12) und ein den radialen Spalt (8) zwischen Tragelement (5) und einem Bauteil (2) überdeckendes Dichtelement (9) aufweist und die der Schulter (7) gegenüberliegende Seite (15) des Tragelementes (5) von dem einen höheren Druck p2 aufweisenden Raum (3) beaufschlagbar ist.

## Beschreibung

Die Erfindung betrifft eine Vorrichtung zur Abdichtung von Zwei Räumen unterschiedlichen Druckes gemäß dem Oberbegriff des Patentanspruches 1.

Bei der Abdichtung von zwei Räumen unterschiedlichen Druckes über eine Schulter müssen für die Erhaltung der Dichtfunktionen sehr kleine axiale Spalte oder bei Abdichtung an der Zylinderwand sehr kleine radiale Spalte beim Einsatz von handelsüblichen Dichtelementen realisiert werden. Soll für den axialen Spalt eine rein metallische Abdichtung ausgeführt werden, muß für eine ausreichende Flächenpressung im Dichtbereich mit einem Spalt gleich Null gesorgt werden. In vielen Einsatzfällen ist die Einhaltung der genannten Forderungen aus folgenden Gründen nicht möglich:
- Unterschiedliche Wärmeausdehnung zweier Bauteile aufgrund von Δα oder ΔT oder Δl zu weiteren Fixpunkten (Doppelpassung in axialer Richtung).
- Radiale oder axiale Aufweitung (Dehnung) des Gehäuses
- Vorhandene Fertigungsungenauigkeiten bei vorhandenen Konstruktionen in axialer Richtung, radialer Richtung, Planlauf oder Rundlauf.
- Mit vorhandenen Fertigungsmöglichkeiten kann nicht oder nur unter unvertretbarem Aufwand die notwendige Genauigkeit in axialer und radialer Richtung bzw. Planlauf und Rundlauf erreicht werden.

Aufgabe der Erfindung ist es, eine Vorrichtung zur Abdichtung von zwei Räumen unterschiedlichen Druckes anzugeben, mit der die zuvor erläuterten Probleme vermeidbar sind.

Diese Aufgabe wird mit den im kennzeichnenden Teil des Anspruches 1 angegebenen Merkmalen gelöst. Vorteilhafte Weiterbildungen sind Bestandteil von Unteransprüchen.

Kern der Erfindung ist die Ausgestaltung der Dichtung als ein Tragelement, das einen etwa rechteckigen Querschnitt aufweist und axial verschiebbar ist. In diesem Tragelement ist ein Mittel angeordnet, das die der Schulter zugewandte Seite des Tragelementes an der Schulter zur Anlage bringt. Außerdem weist das Tragelement ein den radialen Spalt überdeckendes Dichtelement auf. Die der Schulter gegenüberliegende Seite des Tragelementes ist von dem einen höheren Druck aufweisenden Raum her beaufschlagbar.

Vorzugsweise ist das das Tragelement an der Schulter zur Anlage bringende Mittel eine Druckfeder, die in einer axialen Ausnehmung des Tragelementes angeordnet ist. Ein Ende der Druckfeder stützt sich auf dem Boden der Ausnehmung ab und das andere Ende am Bauteil. Auf diese Weise wird das Tragelement mittels der Federkraft gegen die Schulter vorgespannt. Diese Vorspannung ist dann von Bedeutung, wenn, wie weiterbildend vorgeschlagen, in dem der Schulter zugewandten Bereich des Tragelementes ein weiteres Dichtelement angeordnet ist. Dieses Dichtelement entfaltet auch dann seine Wirkung, wenn die Druckdifferenz zwischen den beiden abzudichtenden Räumen Null sein sollte. Bei steigender Druckdifferenz wird die Dichtwirkung durch die auf der Rückseite des Tragelementes wirkende Axialkraft vergrößert. Dies ist besonders bei einer rein metallischen Abdichtung unbedingt erforderlich. Bei sehr großen Druckdifferenzen muß der radiale Spalt sehr klein sein, damit die sich ergebende Größe des radialen Spaltes zwischen Tragelement und Bauteil der maximal zulässigen Kompression des Dichtelementes entspricht. Unterstützend kann man die Formteilfestigkeit des Tragelementes deshalb so wählen, daß durch den von außen wirkenden Differenzdruck das Tragelement gestaucht und damit der radiale Spalt verringert wird. Eine Möglichkeit, die Formteilfestigkeit zu beeinflussen, ist, den Querschnitt des Tragelementes zu verändern.

Für die Dichtelemente, unabhängig, ob axial oder radial angeordnet, können handelsübliche für den Einsatzfall geeignete Dichtungen verwendet werden. Beispielsweise könnte dies ein O-Ring sein. Aber auch der Einsatz von Spezialdichtungen, wie beispielsweise ein mit einer Feder verstärkter Teflonring ist möglich.

Als Montagesicherung für das mit der Federkraft beaufschlagte Tragelement wird in dem entsprechenden Baute ein Anschlag angeordnet. Dies kann ein Sprengring, ein Zylinderstift, eine Spannhülse, eine Schraube oder dergleichen sein.

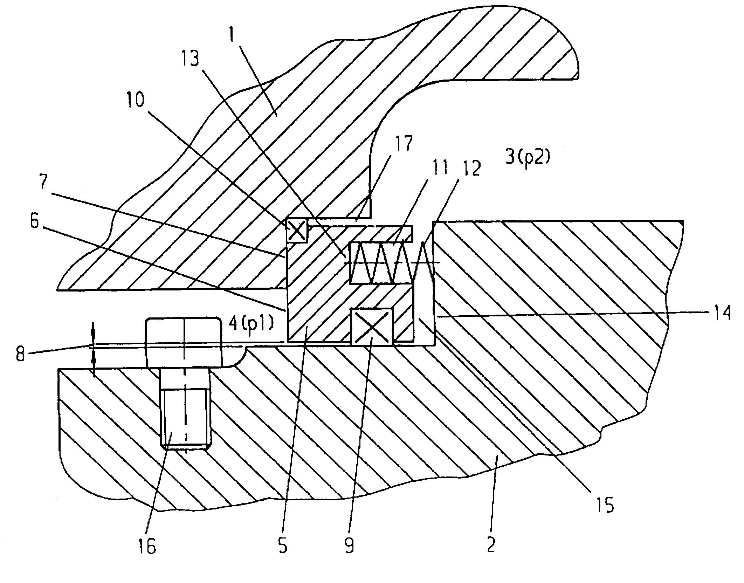

In der einzigen Figur ist in einem Längsschnitt die erfindungsgemäße Vorrichtung dargestellt.

In einem durch zwei Bauteile 1, 2 gebildeten ersten Raum 3 soll der Druck p₂ und in dem zweiten Raum 4 der Druck p₁ herrschen, wobei p₂ > p₁ sein soll. Die beiden einen unterschiedlichen Druck aufweisenden Räume 3, 4 werden durch die erfindungsgemäß ausgebildete Vorrichtung abgedichtet. Diese Vorrichtung besteht aus einem einen etwa rechteckigen Querschnitt aufweisenden Tragelement 5, das mit einer Seite 6 an der am ersten Bauteil 1 angeordneten die Axialkraft aufnehmenden Schulter 7 zur Anlage kommt. Zwischen dem zweiten Baute 2 und dem Tragelement 5 ist ein radialer Spalt 8 vorgesehen, damit die Bauteile 1, 2 bei Erwärmung sich ohne gegenseitige Behinderung ausdehnen können. Zur Überdeckung dieses radialen Spaltes 8 ist in dem dem zweiten Bauteil 2 zugewandten Bereich ein Dichtelement 9 angeordnet. Dieses ist so ausgelegt, daß es ohne Einschränkung den während des Betriebes sich einstellenden größten und kleinsten Spalt 8 sicher abdecken kann. Die axiale Abdichtung zwischen Tragelement 5 und erstem Bauteil 1 kann über eine rein metallische Abdichtung erfolgen. In diesem Ausführungsbeispiel ist in dem der Schulter 7 zugewandten Bereich des Tragelementes 5 ein weiteres Dichtelement 10 angeordnet. Damit dieses auch bei einer Druckdifferenz gleich Null zwischen den beiden Räumen 3, 4 wirksam ist, ist in einer axialen Ausnehmung 11 des Tragelementes 5 eine Druckfeder 12 angeordnet. Diese Druckfeder 12 stützt sich mit einem Ende am Boden 13 der Ausnehmung 11 und mit dem anderen Ende an einem Absatz 14 des zweiten Bauteiles 2 ab. Stellt sich während des Betriebes eine Druckdifferenz zwischen den beiden Räumen 3, 4 ein, dann wirkt gegen die Kraft F_{Feder} eine Kraft F₁, gebildet aus dem Produkt p₁ x Fläche der Seitenwand 6 des Tragelementes und in Richtung der Feder eine Kraft F₂, gebildet aus dem Produkt p₂ x Fläche der Rückseite 15 des Tragelementes. Da mit p₂ ≥ p₁ auch F₂ ≥ F₁ ist, überwiegt immer die Summe der nach links wirkenden Kräfte, so daß eine ausreichend axiale Abdichtung gewährleistet ist. Der radiale Spalt 17 zwischen Tragelement 5 und Bauteil 1 kann dabei beliebig groß werden, beispielsweise durch Aufweitung des Bauteiles 1.

Als Montagesicherung für das mit einer Feder 12 vorgespannte Tragelement 5 ist in diesem Ausführungsbeispiel im zweiten Bauteil 2 eine Schraube 16 angeordnet. Alternativ könnte für diesen Anschlag auch ein Sprengring, ein Zylinderstift, eine Spannhülse oder dergleichen vorgesehen sein.

## Patentansprüche

1. Vorrichtung zur Abdichtung von zwei Räumen unterschiedlichen Druckes über eine die Axialkräfte aufnehmende Schulter zwischen einem ersten warmgehenden metallischen Bauteil und mit einem radialen Spalt dazu angeordneten zweiten warmgehenden metallischen Bauteil, insbesondere Stator oder Gehäusedeckel und Gehäuse einer Turbomaschine, mit einer an der Schulter zur Anlage kommenden den radialen Spalt überdeckenden Dichtung,
dadurch gekennzeichnet,
daß die Dichtung aus einem einen etwa rechteckigen Querschnitt aufweisenden und axial verschiebbaren Tragelement (5) besteht, das ein im Tragelement (5) angeordnetes die der Schulter (7) zugewandte Seite (6) des Tragelementes (5) zur Anlage an der Schulter (7) bringendes Mittel (12) und ein den radialen Spalt (8) zwischen Tragelement (5) und einem Bauteil (2) überdeckendes Dichtelement (9) aufweist und die der Schulter (7) gegenüberliegende Seite (15) des Tragelementes (5) von dem einen höheren Druck p2 aufweisenden Raum (3) beaufschlagbar ist.

2. Vorrichtung nach Anspruch 1,
dadurch gekennzeichnet,
daß die Größe des radialen Spaltes (8) zwischen Tragelement (5) und Bauteil (2) der maximal zulässigen radialen Kompression des Dichtelementes (9) entspricht.

3. Vorrichtung nach Anspruch 2,
dadurch gekennzeichnet,
daß die Formteilfestigkeit des Tragelementes (5) so gewählt ist, daß der radiale Spalt (8) durch radiale Verformung des Tragelementes (5) verringerbar ist.

4. Vorrichtung nach einem der Ansprüche 1 - 3,
dadurch gekennzeichnet,
daß das das Tragelement (5) an der Schulter (7) zur Anlage bringende Mittel eine in einer axial sich erstreckenden Ausnehmung (11) des Tragelementes (5) angeordnete Druckfeder (12) ist, die sich mit einem Ende am Boden (13) der Ausnehmung (11) und mit dem anderen Ende am Bauteil (2) abstützt.

5. Vorrichtung nach einem der Ansprüche 1 - 4,
dadurch gekennzeichnet,
daß in dem der Schulter (7) zugewandten Bereich des Tragelementes (5) ein weiteres das axiale Spiel zwischen Schulter (7) und der der Schulter (7) zugewandten Seite (6) des Tragelementes (5) abdeckendes Dichtelement (10) angeordnet ist.

6. Vorrichtung nach einem der Ansprüche 1 - 5,
dadurch gekennzeichnet,
daß als Montagesicherung für das mit einer axialen Kraft beaufschlagte Tragelement (5) in dem entsprechenden Bauteil (2) ein Anschlag (16) für das Tragelement (5) angeordnet ist.
